## Europäisches Patentamt
## European Patent Office
## Office européen des brevets

(19)

(11) Veröffentlichungsnummer: **0 010 310**
**B1**

(12) **EUROPÄISCHE PATENTSCHRIFT**

(45) Veröffentlichungstag der Patentschrift: **03.11.82**

(51) Int. Cl.³: **G 05 D 9/02, F 16 K 7/17**

(21) Anmeldenummer: **79104061.1**

(22) Anmeldetag: **19.10.79**

(54) **Absperrventil zur Kontrolle eines Flüssigkeitsstandes.**

(30) Priorität: **24.10.78 HU PA001331**

(43) Veröffentlichungstag der Anmeldung:
**30.04.80 Patentblatt 80/9**

(45) Bekanntmachung des Hinweises auf die Patenterteilung:
**03.11.82 Patentblatt 82/44**

(84) Benannte Vertragsstaaten:
**AT BE CH DE FR GB IT LU NL SE**

(56) Entgegenhaltungen:
**FR - A - 2 151 539**

(73) Patentinhaber: **OMÜV Orvosi Müszer és Vasipari Szövetkezet**
**Munkácsy u. 48**
**HU-2045 Törökbálint (HU)**

(72) Erfinder: **Pataki, Jozsef**
**Lakatos u. 24**
**HU-1184 Budapest (HU)**
Erfinder: **Bucsi, Jozsef**
**Atilla u. 26**
**HU-1201 Budapest (HU)**
Erfinder: **Bona, István, Dr.**
**Mohai köz 3**
**HU-1119 Budapest (HU)**
Erfinder: **Koty, Antal**
**Kiss János alt. 24/c.**
**HU-1126 Budapest (HU)**
Erfinder: **Hidvegi, Ferenc**
**Bajcsy Zs. u. 38**
**HU-2045 Törökbálint (HU)**
Erfinder: **Gazdag, András**
**Rozsa F. u. 78**
**HU-1064 Budapest (HU)**
Erfinder: **Szilvasi, Endre**
**Muzeum krt. 4/b.**
**HU-1088 Budapest (HU)**

Courier Press, Leamington Spa, England.

(74) Vertreter: **Viering, Hans-Martin, Dipl.-Ing. et al,**
**Patentanwälte Viering & Jentschura**
**Steinsdorfstrasse 6**
**D-8000 München 22 (DE)**

2

## Absperrventil zur Kontrolle eines Flüssigkeitsstandes

Die Erfindung betrifft ein Absperrventil zur Kontrolle eines Flüssigkeitsstandes. Solche Ventile werden auf vielen Anwendungsgebieten benötigt, um z. B. Behälter, Gefäße und dergleichen bis zu einem vorher festgelegten Niveau anzufüllen, bzw. in einem Silo, einem Tank und dergleichen einen vorher bestimmten maximalen und minimalen Flüssigkeitsstand einzuhalten.

Zur Kontrolle eines Flüssigkeitsstandes ist ein Absperrventil bekannt, das mit einem entsprechend dem Füllstand verstellbaren Schwimmer arbeitet. In dem Ventilgehäuse ist zwischen dessen Eintrittsstutzen und Austrittskanal ein in Strömungsrichtung schließendes Hauptventil ausgebildet, dessen Ventilkammer von einer den Ventilkörper des Hauptventils tragenden Membran in eine erste Membrankammer und eine mit dieser über eine Verbindungsöffnung verbundene zweite Membrankammer unterteilt ist, in der ein Durchlaß mündet, der von einem gegen die Strömungsrichtung schließenden Hilfsventil beherrscht ist, an dessen als zweiarmiger Schwenkhebel ausgebildetem Hilfsventilkörper der Schwimmer befestigt ist. Dadurch wird der Durchlaß unter dem Gewicht des Schwimmers geöffnet gehalten, solange der vorgeschriebene Flüssigkeitsstand noch nicht erreicht ist. Dadurch ist die zweite Membrankammer über den Durchlaß entlüftet, so daß unter dem Flüssigkeitsdruck in der mit dem Eintrittsstutzen verbundenen ersten Membrankammer das Hauptventil geöffnet gehalten wird. Wird das Hilfsventil hingegen mittels des Schwimmers geschlossen, so steigt der Druck in der zweiten Membrankammer an, wodurch das Hauptventil geschlossen wird.

Ein Vorteil derartiger Absperrventile liegt darin, daß sie ohne äußere elektrische oder pneumatische Hilfsenergie arbeiten, so daß sie auch an explosionsgefährdeten Orten betrieben werden können. Nachteilig ist jedoch, daß die von dem Schwimmer betätigten mechanischen Teile, nämlich der schwenkbare Hilfsventilkörper, sich abnutzen oder verklemmen können, so daß dann die Funktionstüchtigkeit des Absperrventils beeinträchtigt ist. Außerdem hat ein derartiges Absperrventil mit Schwimmer einen entsprechenden Platzbedarf.

Durch die Erfindung wird die Aufgabe gelöst, ein zur Kontrolle eines Flüssigkeitsstandes dienendes, ohne äußere Hilfsenergie auskommendes Absperrventil zu schaffen, dessen Platzbedarf geringer ist als ein mittels eines Schwimmers betätigtes Absperrventil und welches mit einer minimalen Anzahl beweglicher Teile auskommt.

Die Erfindung bezieht sich also auf ein Absperrventil zur Kontrolle eines Flüssigkeitsstandes, mit einem Ventilgehäuse, in welches ein Eintrittsstutzen und ein Austrittskanal mit einem Ventilsitz für einen in Abhängigkeit vom Flüssigkeitsstand betätigten Ventilkörper münden, der mit dem Ventilsitz ein in Strömungsrichtung schließendes Hauptventil bildet, dessen Ventilkammer von einer den Ventilkörper tragenden Membran in eine untere Membrankammer und eine mit dieser über eine Verbindungsöffnung verbundene obere Membrankammer unterteilt ist, über der ein Hilfsventil mit einem Hilfsventilkörper ausgebildet ist, der mit einem Hilfsventilsitz an einem zu der oberen Membrankammer des Hauptventils führenden Durchlaß zusammenwirkt und den Durchlaß bei Erreichen des gewünschten Flüssigkeitsstandes schließt, so daß das Hauptventil durch den sich in der oberen Membrankammer aufbauenden Druck geschlossen wird. Gemäß der Erfindung weist bei einen derartigen Absperrventil das ebenfalls in Strömungsrichtung schließende Hilfsventil eine Hilfsventilkammer auf, welche von einer den Hilfsventilkörper tragenden zweiten Membran in eine obere Membrankammer und eine untere Membrankammer unterteilt ist, in welcher eine Ablaufleitung mündet. Außerdem ist der Ventilsitz des Hauptventils am oberen Rand einer sich in Ausströmrichtung verengenden Austrittsdüse ausgebildet, an deren Düsenverengung ein Saugkanal mündet, der einerseits mit einem bis zum gewünschten Flüssigkeitsstand reichenden Saugrohr, und andererseits mit der oberen Membrankammer des Hilfsventils in Verbindung steht und beim Schließen des Saugrohres durch die Flüssigkeit in der oberen Membrankammer des Hilfsventils einen Unterdruck erzeugt, durch welchen das Hilfsventil geschlossen wird.

Das vorstehend beschriebene Absperrventil ermöglicht eine Anfüllen des Behälters bis zu einem gewissen Niveau und schließt bei Erreichen dieses Füllstandes selbsttätig ohne Verwendung irgendwelcher Hilfsenergie allein dadurch, daß hierzu die kinetische Energie der Flüssigkeit bzw. die durch Druck und Strömung verursachten Druckdifferenzen ausgenützt werden.

Das erfindungsgemäße Absperrventil kann auch so ausgestaltet werden, daß es zum Einstellen eines minimalen und eines maximalen Flüssigkeitsstandes in irgendeinem Behälter geeignet ist, mithin also ein Ventil ist, welches beim Erreichen des höchsten Flüssigkeitsstandes selbsttätig schließt, beim Sinken des Flüssigkeitsspiegels unter einen Mindeststand aber selbsttätig öffnet.

Um dies zu erreichen, ist bei der Ausgestaltung der erfindungsgemäßen Absperrventils am unteren Ende des an die Austrittsdüse anschließenden Austrittsrohres ein Überlaufspeicher vorgesehen, an dessen Boden ein mit der oberen Membrankammer des Hilfsventils verbundenes Doppel-U-Rohr angeschlossen ist, dessen beiden über einen oberen Verbindungssteg miteinander verbundenen U-Teile unterschiedliche Schenkellängen aufweisen, so daß der U-Steg des einen U-Teils höher liegt als der U-Steg des der oberen Membrankammer zugeordneten anderen U-Teils. An dem höher liegenden U-Steg ist eine Austrittsöffnung ausgebildet, wohingegen vorzugsweise ein Tauchrohr am Verbindungssteg der beiden U-Teile angeschlossen ist.

Um dafür zu sorgen, daß der Flüssigkeitsspiegel beim Anfüllen des Behälters relativ ungestört bleibt, kann am unteren Ende des Austrittsrohrs unter der Austrittsdüse ein Ausgabeorgan ausgebildet sein, durch welches die Flüssigkeit horizontal ausgebreitet wird. Damit aber dem Einfluß von gegebenenfalls dennoch auftretenden Flüssigkeitswellen begegnet ist, kann das untere Ende des Saugrohres mit einem Wellendämpfungsrohr umgeben sein.

Das erfindungsgemäße Absperrventil enthält außer den beweglichen Membranen und den daran sitzenden Ventilkörpern keine beweglichen Bestandteile, so daß die Möglichkeit eines Schadhaftwerdens nur sehr gering ist. Zur Benutzung des erfindungsgemäßen Absperrventils sind besondere Fähigkeiten nicht erforderlich. Das Ventil kann auch nachträglich in vorhandene Leitungen eingebaut werden.

Die Erfindung wird anhand zweier beispielhafter Ausführungsformen erläutert, die aus der Zeichnung ersichtlich sind. In der Zeichnung zeigt:

Fig. 1 eine Ausführungsform des erfindungsgemäßen Absperrventils in der Gestaltung als Füllventil, im Längsschnitt, und

Fig. 2 eine Ausführungsform des erfindungsgemäßen Absperrventils in der Gestaltung als Füllstand-Regelventil, im Längsschnitt.

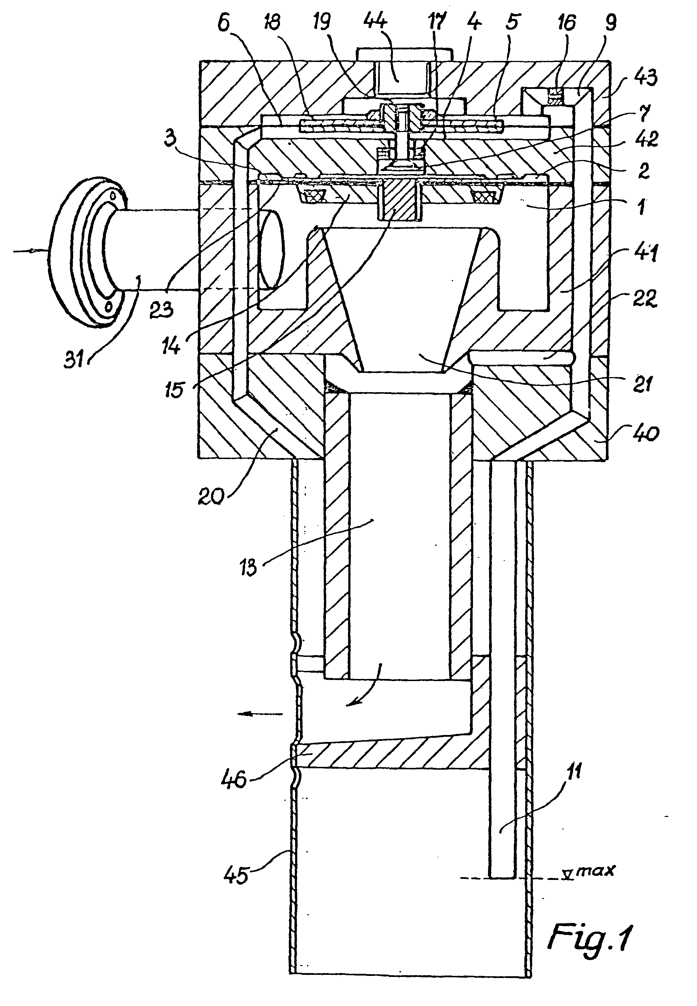

Das Gehäuse des Absperrventils nach Fig. 1 besteht aus vier Gehäuseteilen. Das Hauptventil wird von einem Ventilgehäuse 41 umschlossen, über welchem ein Hilfsventilgehäuse 42 und ein dieses nach oben abschließender Ventildeckel 43 angeordnet sind. Am Ventilgehäuse 41 ist ein die Flüssigkeit zuführender Eintrittsstutzen 31 angebracht. Unter dem Ventilgehäuse 41 ist ein Gehäuse-Unterteil 40 angeschlossen. Im Ventilgehäuse 41 ist eine an dessen oberem Rand endende Membrankammer 1 ausgebildet, in welche der Eintrittsstutzen 31 mündet. Im Boden des Ventilgehäuses 41 ist eine nach oben in die Membrankammer 1 hineinragende Austrittsdüse 21 ausgebildet, so daß der untere Querschnitt der Membrankammer 1 kleiner ist als deren oberer Querschnitt. Der obere Rand der Austrittsdüse 21 ist als Ventilsitz ausgebildet, während sich der Düsenkanal nach unten konisch verengt.

In der Unterseite des Ventilgehäuses 42 ist eine nach unten offene Membrankammer 2 ausgebildet, deren Querschnitt dem der Membrankammer 1 im Ventilgehäuse 41 entspricht. In der Oberseite des Hilfsventilgehäuses 42 ist eine nach oben offene Membrankammer 4 ausgestaltet, während in der Unterseite des das Hilfsventilgehäuse 42 nach oben abschließenden Ventildeckels 43 eine nach unten offene Membrankammer 5 ausgebildet ist.

Die nach oben offene Membrankammer 1 im Ventilgehäuse 41 und die nach unten offene Membrankammer 2 des Hilfsventilgehäuses 42 sind voneinander durch eine Membran 3 getrennt, die zwischen dem Ventilgehäuse 41 und dem Hilfsventilgehäuse 42 eingespannt ist.

In der Membran 3 ist ein kleines Loch als Verbindungsöffnung 23 der Membrankammern 1 und 2 ausgebildet. Ferner ist in der Mitte der Membran 3 an deren Unterseite mit Hilfe eines Zapfens 15 ein tellerartiger Ventilkörper 14 befestigt, welcher mit dem die Austrittsdüse 21 oben begrenzenden Ventilsitz zusammenwirkt. Die Membrankammer 2 des Hilfsventilgehäuses 42 und dessen Membrankammer 4 sind über einen Durchlaß mit einem nach unten weisenden Ventilsitz 17 miteinander verbunden.

Die oben offene Membrankammer 4 des Hilfsventilgehäuses 42 wird von der Membrankammer 5 im Ventildeckel 43 durch eine zwischen das Hilfsventilgehäuse und den Ventildeckel eingesetzte Membran 6 getrennt, an welcher über eine Membranscheibe 18 und eine Versteifung 19 ein mit dem Ventilsitz 17 zusammenwirkender tellerartiger Hilfsventilkörper 7 befestigt ist, dessen Ventilstößel somit durch den Durchlaß zwischen der Membrankammer 2 und der Membrankammer 4 hindurchragt, so daß der Hilfsventilkörper 7 im Zusammenwirken mit dem Hilfsventilsitz 17 den Durchlaß schließt, wenn er nach oben verstellt wird.

In der dargestellten Ausführungsform schließt an die Düsenverengung am unteren Rand der Austrittsdüse 21 ein demgegenüber erweiterter Ringraum an, der sich in einem achsgleich mit der Austrittsdüse 21 unter dieser angeordneten Austrittsrohr 13 fortsetzt. In den Ringraum mündet ein Saugkanal 22, der einerseits über den Verbindungskanal 9 mit der oberen Membrankammer 5 des Hilfsventils, und andererseits mit einem sich an die Unterseite des Gehäuseunterteils 40 anschließenden Saugrohr 11 in Verbindung steht, welches bis zu dem gewünschten Flüssigkeitsstand hinabreicht. In dem Verbindungskanal 9 ist eine Drosselverengung 16 ausgebildet.

Die untere Membrankammer 4 des Hilfsventils steht mit einer nach unten frei in den Behälter oberhalb des unteren Endes des Saugrohrs 11 ausmündenden Ablaufleitung 20 in Verbindung.

Am unteren Ende des Austrittsrohrs 13 ist ein die ausströmende Flüssigkeit horizontal ableitendes und fächerförmig ausbreitendes Ausgabeorgan 46 vorgesehen, während das Saugrohr 11 von einem Wellendämpfungsrohr 45 umgeben ist, welches tiefer als das Saugrohr 11 hinabreicht. Oben am Ventildeckel 43 in Fig. 1 ist ein Gewindestopfen 44 eingeschraubt, so daß die obere Ventilkammer 6 des Hilfsventils nach oben dicht verschlossen ist.

Die Arbeitsweise des in Fig. 1 dargestellten Absperrventils ist wie folgt:

Über einen am Eintrittsstutzen 31 angeschlossenen Schlauch oder eine Leitung tritt die Flüssigkeit in die untere Membrankammer 1 des Hauptventils ein und strömt von dort durch den Spalt zwischen dem Ventilkörper 14 und dem oberen Rand der Austrittsdüse 21 durch die Austrittsdüse 21 und das Austrittsrohr 13 in den zu füllenden Behälter.

Infolge des Flüssigkeitsrückstaus, welcher durch die vom Spalt zwischen dem Ventilkörper 14 und seinem Ventilsitz sowie die sich nach unten verengende Austrittsdüse 21 hervorgerufen wird, wird über die Verbindungsöffnung 23 die obere Membrankammer 2 des Hauptventils und über den den Hilfsventilsitz enthaltenden Durchlaß auch die untere Membrankammer 4 des Hilfsventils mit Flüssigkeit angefüllt, so daß in den Membrankammern 2 und 4 nahezu der gleiche Druck vorherrscht. Aus der Membrankammer 4 strömt dann die Flüssigkeit über die Ablaufleitung 20 frei in den Behälter aus.

Die an der unteren Düsenverengung der Austrittsdüse 21 austretende Flüssigkeit übt auf die Mündung des Saugkanals 22 eine geradezu injektorartige Wirkung aus, der zufolge durch das Saugrohr 11 Luft aus dem Behälter eingesaugt wird, da sie aus der oberen Membrankammer 5 über den Verbindungskanal 9 infolge der Drosselverengung 16 nicht angesaugt werden kann.

Die über das Austrittsrohr 13 und das Ausgabeorgan 46 in den Behälter zuströmende Flüssigkeit füllt nun allmählich den Behälter an. Sobald der Flüssigkeitsspiegel im Behälter das untere Ende des bis zu einer vorher festgelegten Tiefe hinabreichenden Saugrohres 11 erreicht hat, wird dieses verschlossen, so daß keine weitere Luft mehr über das Saugrohr 11 angesaugt werden kann. Es wird nun also Luft über den Verbindungskanal 9 aus der oberen Membrankammer 5 des Hilfsventils herausgesaugt, so daß der Druck in der Membrankammer 5 sinkt, sich dadurch die Membran 6 anhebt und von dieser der Hilfsventilkörper 7 von unten auf den Hilfsventilsitz 18 gezogen wird, so daß das Hilfsventil geschlossen wird. Dadurch steigt der Druck in der Membrankammer 2 über den infolge der Strömung durch den Spalt zwischen dem Ventilkörper 14 und seinem Ventilsitz unter diesem herrschenden Druck an, so daß durch den Differenzdruck die Membran 3 mit dem daran befestigten Ventilkörper 14 auf den Ventilsitz der Austrittsdüse 21 gepreßt wird, so daß das Hauptventil schließt.

Nach dem Schließen des Hauptventils kann sich zwar die obere Membrankammer 5 des Hilfsventils über das über dem Flüssigkeitsspiegel mündende Austrittsrohr 13, den Saugkanal 22 und die Verbindungsleitung 9 entlüften, wodurch das Hilfsventil sich wieder öffnen kann, so daß auch das Hauptventil sich wieder öffnen kann. Solange jedoch das Saugrohr 11 mit seinem unteren Ende in die Flüssigkeit eintaucht, werden die vorstehend beschriebenen Druckverhältnisse, die zum Schließen des Hilfsventils und des Hauptventils führen, sofort wieder aufgebaut, so daß das Hauptventil selbst bei manuellem Öffnen sofort wieder schließt. Das Ventil kann eigentlich nur nach dem Öffnen des Gewindestopfens 44 mechanisch oder mit Hilfe eines Druckimpulses bei in die Flüssigkeit eintauchendem Saugrohr 11 offen gehalten werden.

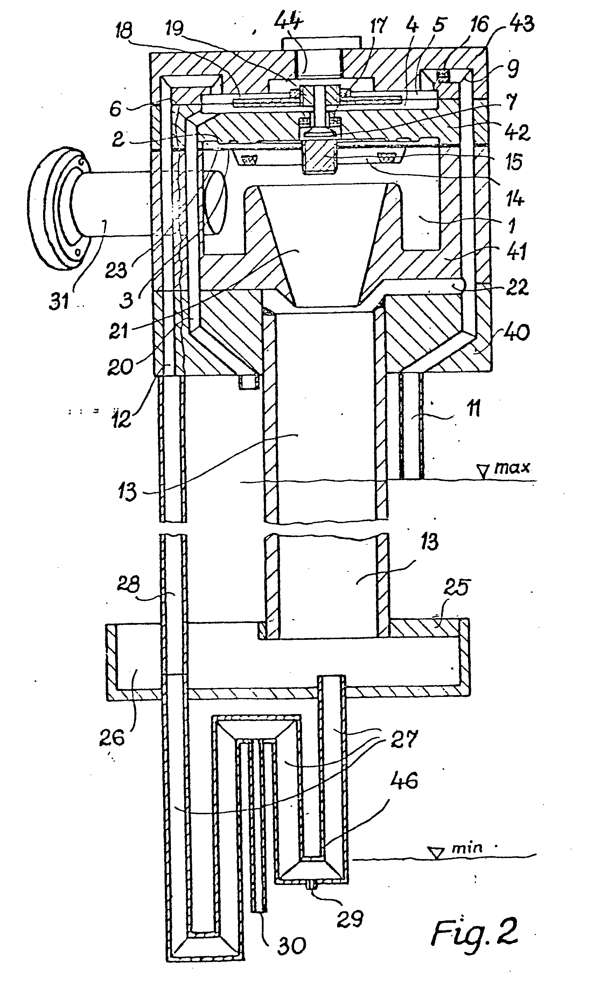

Aus Fig. 2 ist ein Ausführungsbeispiel ersichtlich, durch welches das Absperrventil gemäß der Erfindung zu einem Flüssigkeitsstand-Regelventil wird. Derjenige Teil des Absperrventils, der zum Einstellen und Halten eines maximalen Flüssigkeitsstandes dient, stimmt völlig mit der Lösung nach Fig. 1 überein und arbeitet auch in der gleichen Weise. Bei einem selbsttätigen Flüssigkeitsstandregler ist es jedoch zusätzlich noch erforderlich, daß das Ventil beim Absinken des Flüssigkeitsstandes unter einen vorher festgelegten Minimalwert selbsttätig wieder öffnet, so daß der Behälter bis zum Erreichen des maximalen Flüssigkeitsstandes wieder gefüllt werden kann. Um auch diese Aufgabe lösen zu können, ist gemäß Fig. 2 das Absperrventil gemäß der Erfindung noch mit den folgenden Bestandteilen ergänzt:

Wie aus Fig. 2 ersichtlich, mündet das Austrittsrohr 13 mit seinem unteren Ende in einen Überlaufspeicher 26, der unterhalb des unteren Endes des Saugrohres 11 angeordnet ist und mit einem Deckel 25 teilweise abgedeckt ist. Am Boden des Überlaufspeichers 26 ist ein Doppel-U-Rohr 27 ausgeschlossen, dessen mit ihren U-Stegen nach unten weisenden U-Teile, die mit einem Verbindungssteg miteinander verbunden sind, voneinander unterschiedliche Schenkellängen haben, so daß die unteren U-Stege der U-Teile in unterschiedlicher Höhe liegen. Der kürzere U-Teil schließt an den Überlaufspeicher 26 an, so daß der U-Steg dieses U-Teils höher liegt als derjenige des anderen U-Teils, welches mit seinem freien Ende über ein Rohr 28 und einen Impulsleitungskanal 12 mit der oberen Membrankammer 5 im Ventildeckel 43 in Verbindung steht. Am höher liegenden U-Steg des Doppel-U-Steg des Doppel-U-Rohres 27 ist eine Austrittsöffnung 29 ausgebildet, während ein Tauchrohr 30 an dem Verbindungssteg zwischen den beiden U-Teilen des Doppel-U-Rohres 27 angeschlossen ist. Das Tauchrohr 30 ragt im Ausführungsbeispiel nach unten über die Austrittsöffnung 29 hinaus.

Die Arbeitsweise des Absperrventils gemäß Fig. 2 beim Schließvorgang wird hier nicht nochmals beschrieben; sie stimmt mit der oben beschriebenen Arbeitsweise überein. Ein Unterschied besteht nur insofern, als die über das Austrittsrohr 13 eintreffende Flüssigkeit gemäß Fig. 2 in den Überlaufspeicher 26 strömt und von dort aus teils über den Überlauf in den anzufüllenden Behälter gelangt, zum anderen Teil jedoch das Doppel-U-Rohr 27 auffüllt. Die dabei im Doppel-U-Rohr verdrängte Luft fließt teils über das Rohr 28 in die Membrankammer 5 und kann von dort über die Drosselverengung 16, die Verbindungsleitung 9 und den Saugkanal 22 ausströmen, teils wird sie durch das Tauchrohr 30 hindurch verdrängt. Da die Austrittsöffnung 29 nur einen ganz kleinen Querschnitt hat, wird das Doppel-U-Rohr 27 in kurzer Zeit mit Flüssigkeit angefüllt. Dadurch wird die Verbindung der oberen Membrankammer 5 des Hilfsventils mit dem Behälterraum durch die Flüssigkeit im Doppel-U-Rohr verschlossen, so daß das Ventil in der oben beschriebenen Weise schließen kann, sobald das Saugrohr 11 beim maximalen Flüssigkeitsstand in die Flüssigkeit eintaucht.

Wenn in dem Behälter nach dem Erreichen des höchsten Flüssigkeitsstandes bei geschlossenem Absperrventil der Flüssigkeitsspiegel absinkt, so sinkt entsprechend auch der Flüssigkeitsspiegel im Rohr 28, über welches das Doppel-U-Rohr 27 mit der oberen Membrankammer 5 des Hilfsventils verbunden ist. Durch die dadurch ausgeübte Saugwirkung wird der Unterdruck in der oberen Membrankammer 5 aufrechterhalten, so daß das Hilfsventil und damit das Hauptventil weiterhin geschlossen bleiben. Wenn der Flüssigkeitsspiegel weiter sinkt, wird die Flüssigkeit aus dem längeren U-Teil über das Tauchrohr 30 bzw. die Austrittsöffnung 29 abgesaugt, so daß der Flüssigkeitsspiegel im Rohr 28 unter den Verbindungssteg des Doppel-U-Rohres absinkt, so daß somit die Flüssigkeitssäule im Rohr 28 kürzer ist als die bis zu dem Verbindungssteg des Doppel-U-Rohres reichende Flüssigkeitssäule.

Sobald der sinkende Flüssigkeitsspiegel jedoch den Flüssigkeitsstand 46 in Höhe des höher liegenden U-Steges des Doppel-U-Rohres 27 erreicht, reißt die Flüssigkeitssperre in diesem U-Teil ab, so daß es zum Druckausgleich kommt und daher die Flüssigkeitssäulen in den Schenkeln des längeren U-Teils sich aneinander angleichen können, somit der Flüssigkeitsspiegel im Rohr 28 plötzlich steigt. Dadurch wird über das Rohr 28 und die Impulsleitung 12 plötzlich ein Druckimpuls in die obere Membrankammer 5 des Hilfsventils gegeben, so daß die Membran 6 nach unten gedrückt wird und das Hilfsventil 7, 17 geöffnet wird. Dadurch kann auch das Hauptventil öffnen, so daß über das Absperrventil das Anfüllen des Behälters mit Flüssigkeit bis zum Erreichen des höchsten Flüssigkeitsstandes wieder einsetzt. Durch entsprechende Bemessung der Drosselverengung 16 läßt sich erreichen, daß durch das Absinken des Flüssigkeitsspiegels im Rohr 28 ein hinreichender Unterdruck in der oberen Membrankammer 5 des Hilfsventils aufrechterhalten bleibt, obwohl das Saugrohr 11 beim Absinken des Flüssigkeitsspiegels geöffnet wird. Gegebenenfalls kann hier auch ein zur Membrankammer 5 hin schließendes Rückschlagventil eingebaut sein.

Wie aus den Ausführungsbeispielen ersichtlich, ist das Absperrventil gemäß der Erfindung einfach aufgebaut und kann ohne jegliche Hilfsenergie das Schließen bzw. Öffnen besorgen. Der Aufbau und die Montage sind einfach und die Instandhaltung erfordert keiner besonderen Fachkenntnisse. Da eine Zuführung von Hilfsenergie hier wegfällt, kann das Absperrventil auch in explosionsgefährlichen Räumen verwendet werden.

**Patentansprüche**

1. Absperrventil zur Kontrolle eines Flüssigkeitsstandes, mit einem Ventilgehäuse (40, 41, 42), in welches ein Eintrittsstutzen (31) und ein Austrittskanal (13, 21) mit einem Ventilsitz für einen in Abhängigkeit vom Flüssigkeitsstand betätigten Ventilkörper (14) münden, der mit dem Ventilsitz ein in Strömungsrichtung schließendes Hauptventil bildet, dessen Ventilkammer von einer den Ventilkörper (14) tragenden Membran (3) in eine untere Membrankammer (1) und eine mit dieser über eine Verbindungsöffnung (23) verbundene obere Membrankammer (2) unterteilt ist, über der ein Hilfsventil mit einem Hilfsventilkörper (7) ausgebildet ist, der mit einem Hilfsventilsitz (17) an einem zu der oberen Membrankammer (2) des Hauptventils führenden Durchlaß zusammenwirkt und den Durchlaß bei Erreichen des gewünschten Flüssigkeitsstandes schließt, so daß das Hauptventil durch den sich in der oberen Membrankammer (2) aufbauenden Druck geschlossen wird, dadurch gekennzeichnet, daß das ebenfalls in Strömungsrichtung schließende Hilfsventil eine Hilfsventilkammer aufweist, welche von einer den Hilfsventilkörper (7) tragenden zweiten Membran (6) in eine obere Membrankammer (5) und eine untere Membrankammer (4) unterteilt ist, in welcher eine Ablaufleitung (20) mündet, daß der Ventilsitz des Hauptventils am oberen Rand einer sich in Ausströmrichtung verengenden Austrittsdüse (21) ausgebildet ist, an deren Düsenverengung ein Saugkanal (22) mündet, der einerseits mit einem bis zum gewünschten Flüssigkeitsstand reichenden Saugrohr (11), und andererseits mit der oberen Membrankammer (5) des Hilfsventils in Verbindung steht und beim Schließen des Saugrohres durch die Flüssigkeit in der oberen Membrankammer (5) des Hilfsventils einen Unterdruck erzeugt, durch welchen das Hilfsventil geschlossen wird.

2. Absperrventil nach Anspruch 1, dadurch gekennzeichnet, daß der Austrittskanal (13) am unteren Ende in einen Überlaufspeicher (26) mündet, an dessen Boden ein Doppel-U-Rohr (27) angeschlossen ist, dessen anderes Ende mit der oberen Membrankammer (5) des Hilfsventils in Verbindung (12, 28) steht und dessen beide über einen oberen Verbindungssteg miteinander verbundene U-Teile mit ihren nach unten weisenden U-Stegen in unterschiedlicher Höhe liegen, wobei der tiefer liegende U-Steg der höher liegende U-Steg eine Austrittsöffnung kammer (5) des Hilfsventils zugeordnet ist und der höher liegende USteg eine Austrittsöffnung (29) aufweist.

3. Absperrventil nach Anspruch 2, dadurch gekennzeichnet, daß an dem Verbindungssteg ein über den höher liegenden U-Steg nach unten hinausreichendes Tauchrohr (30) angeschlossen ist.

4. Absperrventil nach Anspruch 1, dadurch gekennzeichnet, daß am unteren Ende des Austrittskanals (13, 21) ein die Flüssigkeit horizontal ausbreitendes Ausgabeorgan (46) ausgebildet ist und das untere Ende des Saugrohres (11) von einem Wellendämpfungsrohr (45) umgeben ist.

## Claims

1. Stop valve for checking a liquid level, with a valve casing (40, 41, 42), into which issue an inlet pipe connection (31) and an outlet duct (13, 21) with a valve seat for a valve body (14) operated as a function of the liquid level and which with the valve seat forms a main valve closing in the flow direction, whose valve chamber is subdivided by a diaphragm (3) carrying valve body (14) into a lower diaphragm chamber (1) and an upper diaphragm chamber (2) connected thereto by means of a connecting opening (23) and above which is constructed an auxiliary valve with an auxiliary valve chamber (7) cooperating with an auxiliary valve seat (17) on a passage leading to the upper diaphragm chamber (2) of the main valve and which closes the passage on reaching the desired liquid level, so that the main valve is closed by the pressure building up in the upper diaphragm chamber (2), characterized in that the auxiliary valve which also closes in the flow direction has an auxiliary valve chamber subdivided by a second diaphragm (6) carrying the auxiliary valve body (7) into an upper diaphragm chamber (5) and a lower diaphragm chamber (4), into which issues a drain line (20), that the valve seat of the main valve is constructed on the upper edge of an outlet nozzle (21) tapering in the outflow direction, whereby a suction duct (22) issues at its nozzle constriction, which is on the one hand connected to a suction pipe (11) extending up to the desired liquid level and on the other hand to the upper diaphragm chamber (5) of the auxiliary valve and on closing the suction pipe by the liquid in the upper diaphragm chamber (5) of the auxiliary valve an underpressure is produced, which closes the auxiliary valve.

2. Stop valve according to claim 1, characterized in that the outlet duct (13) at the lower end issues into an overflow reservoir (26) to whose bottom is connected a double U-tube (27), whose other end is connected (12, 28) to the upper diaphragm chamber (5) of the auxiliary valve, and whose two U-shaped portions interconnected by means of an upper connection arm are located with their downwardly directed U-shaped arms at different heights, the lower lying U-shaped arms of connection (12, 28) is associated with the upper diaphragm chamber (5) of the auxiliary valve and the higher U-shaped arm has an outlet opening (29).

3. Stop valve according to claim 2, characterized in that a dip pipe (30) extending downwards over the higher U-shaped arm is connected to the connection arm.

4. Stop valve according to claim 1, characterized in that on the lower end of the outlet duct (13, 21) is constructed a distributing member (46) which horizontally spreads out the liquid and the lower end of suction pipe (11) is surrounded by a wave damping pipe (45).

## Revendications

1. Soupape d'obturation pour le contrôle d'un niveau de liquide, comprenant un corps de soupape (40, 41, 42), dans lequel débouchent un tuyau d'entrée (31) et un canal de sortie (13, 21) qui présente un siège de soupape pour un élément d'obturation (14) qui est actionné en fonction du niveau de liquide et qui forme, avec le siège de soupape, une soupape principale qui se ferme dans le sens de l'écoulement et dont la chambre est subdivisée, par une membrane (3) portant l'élément d'obturation (14), en une chambre à membrane inférieure (1) et une chambre à membrane supérieure (2), qui est reliée à cette chambre à membrane inférieure par l'intermédiaire d'un orifice de liaison (23) et au-dessus de laquelle est agencée une soupape auxiliaire présentant un élément d'obturation (7) qui coopère avec un siège de soupape auxiliaire (17) prévu sur un passage qui mène à la chambre à membrane supérieure (2) de la soupape principale et ferme ce passage lorsque le niveau de liquide souhaité est atteint, de façon que la soupape principale soit fermée par la pression constituée dans la chambre à membrane supérieure (2), caractérisée en ce que la soupape auxiliaire, qui se ferme également dans le sens de l'écoulement, présente une chambre de soupape auxiliaire qui est subdivisée, par une deuxième membrane (6) portant l'élément d'obturation (7) de la soupape auxiliaire, en une chambre à membrane supérieure (5) et une chambre à membrane inférieure (4), dans laquelle débouche un conduit de décharge 20, et en ce que le siège de soupape de la soupape principale est façonné au bord supérieur d'un ajutage de sortie (21) qui se rétrécit dans le sens de l'écoulement et sur le rétrécissement duquel débouche un canal d'aspiration (22) qui est en communication, d'une part, avec un tuyau d'aspiration (11) qui va jusqu'au niveau de liquide souhaité et, d'autre part, avec la chambre à membrane supérieure (5) de la soupape auxiliaire et qui, lors de la fermeture du tuyau d'aspiration par le liquide, produit dans la chambre à membrane supérieure (5) de la soupape auxiliaire une dépression par laquelle la soupape auxiliaire est fermée.

2. Soupape d'obturation suivant la revendication 1, caractérisée en ce que le canal de sortie (13) débouche à l'extrémité inférieure dans un collecteur de trop-plein (26) au fond duquel est raccordé un tuyau en double U (27) dont l'autre extrémité est en communication (12, 28) avec la chambre à membrane supérieure (5) de la soupape auxiliaire et dont les deux pièces en U, mutuellement reliées par l'intermédiaire d'un raccord de liaison supérieur, sont situées avec leur dos de U orienté vers le bas à des hauteurs différentes, le dos de U situé le plus bas de la communication (12, 28) étant adjoint à la chambre à membrane supérieure (5) de la soupape auxiliaire tandis que le dos de U situé le plus haut présente un orifice de sortie (29).

3. Soupape d'obturation suivant la revendication 2, caractérisée en ce qu'un tube plongeur (30), qui s'étend vers le bas au-delà du dos de U situé le plus haut, est raccordé au raccord de liaison.

4. Soupape d'obturation suivant la revendication 1, caractérisée en ce qu'un organe de décharge (46) qui répand le liquide horizontalement est agencé à l'extrémité inférieure du canal de sortie (13, 21) et en ce que l'extrémité inférieure du tuyau d'aspiration (11) est entourée par un tube d'amortissement des ondes (45).

*Fig.1*

**0010310**

Fig. 2